Europäisches Patentamt

European Patent Office

Office européen des brevets

(11) Veröffentlichungsnummer: **0 302 453 B1**

## EUROPÄISCHE PATENTSCHRIFT

(45) Veröffentlichungstag der Patentschrift: **19.02.92**

(51) Int. Cl.⁵: **G06K 19/06**, G07F 7/10

(21) Anmeldenummer: **88112564.5**

(22) Anmeldetag: **02.08.88**

(54) **Datenaustauschsystem mit Benutzerterminal und Chipkarte.**

(30) Priorität: **07.08.87 DE 8710852 U**

(43) Veröffentlichungstag der Anmeldung:
**08.02.89 Patentblatt 89/06**

(45) Bekanntmachung des Hinweises auf die
Patenterteilung:
**19.02.92 Patentblatt 92/08**

(84) Benannte Vertragsstaaten:
**AT BE CH DE ES FR GB IT LI NL SE**

(56) Entgegenhaltungen:
**WO-A-82/03286**
**GB-A- 2 189 741**
**US-A- 3 906 460**

(73) Patentinhaber: **Siemens Nixdorf Informationssysteme AG**
**Otto-Hahn-Ring 6**
**W-8000 München 83(DE)**

(72) Erfinder: **Kruse, Dietrich, Dipl.-Ing.**
**Ulmenstrasse 9**
**W-8012 Ottobrunn(DE)**

(74) Vertreter: **Fuchs, Franz-Josef, Dr.-Ing. et al**
**Postfach 22 13 17**
**W-8000 München 22(DE)**

EP 0 302 453 B1

**Beschreibung**

Die Erfindung betrifft ein Datenaustauschsystem nach den Merkmalen des Oberbegriffs des Anspruchs 1.

Für bestehende und zukünftige Anwendungen auf allen Gebieten der Informationsverarbeitung gewinnt die Chipkarte aufgrund des Speichervermögens, der Sicherheit und der Dezentralisierung von Funktionen zunehmend an Bedeutung. Um die vielfältigen Möglichkeiten eines Chipkartensystems nutzen zu können, muß einerseits jeder Benutzer eine dem jeweiligen System angepaßte Chipkarte haben und andererseits müssen die an das System angeschlossenen Terminals mit einem Chipkartenleser versehen sein, der die elektrische und mechanische Verbindung zwischen dem Terminal und der Chipkarte herstellt. Um einen möglichen Mißbrauch von vornherein auszuschließen, sind verschiedene Sicherheitskonzepte entwickelt worden, zu denen beispielsweise die persönliche Identifikationsnummer, die sogenannte PIN gehört. Der Inhaber einer Chipkarte erhält dabei nur dann Zugang zum System, wenn er durch Angabe seiner PIN nachweist, daß die von ihm in den Chipkartenleser eingeführte Chipkarte tatsächlich ihm gehört. Dies geschieht in der Weise, daß die über eine Tastatur eingegebene PIN mit der im Chip der Chipkarte gespeicherten oder errechneten PIN verglichen und erst bei überprüfter Übereinstimmung eine entsprechende Freigabe für den nachfolgenden Datenaustausch erteilt wird.

Die enge schaltungstechnische Verknüpfung zwischen Chipkarte und Benutzerterminal setzt allerdings auch voraus, daß nicht nur der Benutzer der Chipkarte seine Identität nachweist, sondern daß auch auf der Seite des Terminals sichergestellt ist, daß der Datenfluß unmanipuliert abläuft. Dazu gehört zum Beispiel, daß die vom Chipkartenbenutzer eingegebene Identifikationsnummer PIN nicht in betrügerischer Absicht ausgelesen werden kann und daß vom Terminal angezeigte Daten auch mit den an die Chipkarte übergebenen Daten übereinstimmen. Eine Manipulation derart, daß dem Benutzer vermeintlich echte Daten angezeigt und in der Chipkarte falsche Daten verarbeitet werden, muß daher mit absoluter Sicherheit ausgeschlossen werden.

Aus WO 82/03286 ist eine Prozessor-Chipkarte zur Verwendung in einem Datenaustauschsystem bekannt, in welchem Sicherheitsprozduren wie die Identifikation des Kartenbenutzers gegenüber seiner Chipkarte durchgeführt werden, wobei zur Anzeige von diese Sicherheitsprozeduren betreffenden Betriebszuständen auf der Chipkarte eine gesteuerte Leuchtdiode vorgesehen ist. Diese Leuchtdiode ist auf der Oberseite der Chipkarte so angeordnet, daß ihr Betriebszustand bei im Chipkartenleser steckender Chipkarte nur schwer oder unter Umständen gar nicht beobachtet werden kann.

Aus US-A-3 906 460 ist ferner ein tragbarer Datenträger in Kartenform bekannt, der mehrere Leuchtdioden für die Anzeige verschiedener interner Betriebszustände aufweist.

Der vorliegenden Erfindung liegt nun die Aufgabe zugrunde, eine für ein Datenaustauschsystem der eingangs genannten Art vorgesehene Chipkarte in der Weise auszubilden, daß der Benutzer der Chipkarte verschiedene, während des Datenaustausches zwischen Chipkarte und Benutzerterminal bzw. umgekehrt auftretende Betriebszustände anhand jeweils aktivierbarer Leuchtdioden auch dann erkennen kann, wenn der Blick des Betrachters senkrecht auf den Rand der Chipkarte gerichtet ist.

Diese Aufgabe wird erfindungsgemäß durch die im Anspruch 1 angegebenen Merkmale gelöst.

Vorteilhafte Weiterbildungen der Erfindung ergeben sich aus den Merkmalen der Unteransprüche.

Der Erfindungsgegenstand wird im folgenden anhand der Zeichnung näher erläutert.

Dabei zeigen

FIG 1    eine Chipkarte, wie sie im Prinzip aus dem Stand der Technik bekannt ist,

FIG 2    ein Ausführungsbeispiel für eine Chipkarte gemäß der Erfindung,

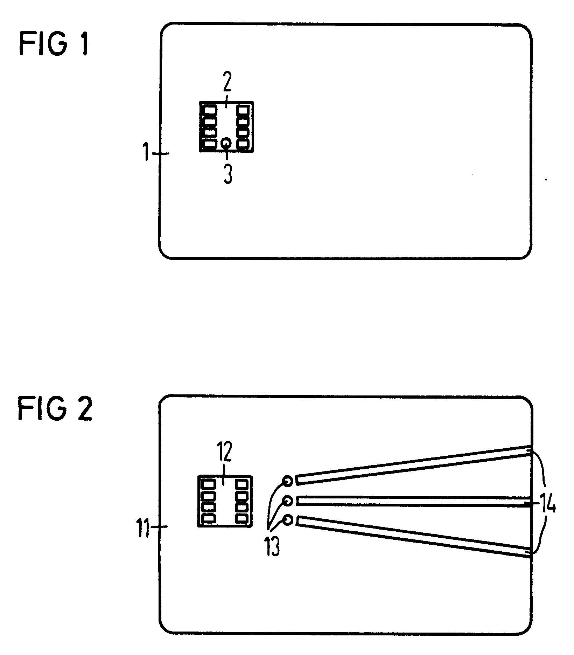

Die FIG 1 zeigt eine Chipkarte 1 mit einem in der Ebene der Chipkarte eingebetteten integrierten Prozessor-Baustein, dem sogenannten Chip 2. Auf dieser Chipkarte 1 befindet sich wenigstens eine Leuchtdiode 3 zur Anzeige bestimmter Betriebszustände, die während einer mit Hilfe der Chipkarte 1 ablaufenden Prozedur auftreten können. Die Leuchtdiode 3 ist im gezeigten Ausführungsbeispiel im Prozessorbaustein integriert. Anhand der Leuchtdioden-Anzeige kann nur der Benutzer einer Chipkarte zum Beispiel feststellen, ob bestimmte Betriebszustände während einer Transaktion manipuliert worden sind oder nicht. Beim bargeldlosen Zahlungsverkehr in Warenwirtschaftssystemen kann der Benutzer einer derart ausgebildeten Chipkarte 1 mit Hilfe der Leuchtdioden-Anzeige unter anderem feststellen, ob die Authentifizierung des die Chipkarte aufnehmenden Händler-Terminals in Ordnung ist, oder ob der am Terminal angezeigte Betrag vom Händler signiert worden ist.

Bei dem in FIG 2 dargestellten Ausführungsbeispiel sind auf der Chipkarte 11 drei elektrisch mit dem Chip verbundene Leuchtdioden 13 vorgesehen, die neben dem Chip 12 in die Chipkarte 11 eingebettet sind. Besonders zweckmäßig ist es, wenn die Anzeige der Betriebszustände an einer Außenkante der Chipkarte, vorzugsweise an der während des Betriebes dem Einsteckschlitz des Chipkartenlesers zugewandten Außenkante erfolgt. Zu diesem Zweck können entweder die Leuchtdioden 13 unmittelbar im Bereich dieser Außenkante plaziert werden oder es werden, wie in FIG. 2 dargestellt, zwischen den einzelnen Leuchtdioden 13 und einer Außenkante der Chipkarte 11 jeweils Lichtleiter 14 angeordnet, die das Licht der Leuchtdioden 13 an den Chipkartenrand weiterleiten.

**Patentansprüche**

1. Datenaustauschsystem, bestehend aus mindestens einem mittels einer Chipkarte (11) betreibbaren Benutzerterminal und mindestens eines Chipkarte, bei dem jeder Datentransfer zwischen der einen integrierten Prozessorbaustein enthaltenden Chipkarte (11) und dem einen Chipkartenleser aufweisenden Benutzerterminal durch eine Reihe von Sicherheitsprozeduren, wie Identifikation des Kartenbenutzers gegenüber seiner Chipkarte, Authentifikation der Karte gegenüber dem System und umgekehrt, Speicherung und Authentifikation der Kommunikationsdaten, gesteuert wird, und bei dem die Chipkarte (11) wenigstens eine gesteuerte Leuchtdiode (13) zur Anzeige von den Datentransfer und/oder die Sicherheitsprozeduren betreffenden Betriebszuständen aufweist, **dadurch gekennzeichnet,** daß die Chipkarte (11) zwischen jeder Leuchtdiode (13) und einer Außenkante der Chipkarte (11) wenigstens je einen Lichtleiter (14) aufweist.

2. Datenaustauschsystem nach Anspruch 1, **dadurch gekennzeichnet,** daß die Lichtleiter (14) zwischen den Leuchtdioden (13) und der während des Betriebes dem Einsteckschlitz des Chipkartenlesers zugewandten Außenkante der Chipkarte (11) angeordnet sind.

3. Datenaustauschsystem nach Anspruch 1 oder 2, **dadurch gekennzeichnet,** daß die Lichtleiter (14) in die Chipkarte (11) eingebettet sind.

**Claims**

1. Data exchange system consisting of at least one user terminal, which can be operated by means of an IC card (11), and at least one IC card, in which each data transfer between the IC card (11) containing an integrated processor component and the user terminal having an IC card reader is controlled by a series of security procedures, such as identification of the card user in respect of his IC card, authentication of the card with respect to the system and vice versa, storage and authentication of the communication data, and in which the IC card (11) has at least one controlled LED (13) for displaying operating states relating to the data transfer and/or the security procedures, characterised in that the IC card (11) has in each case at least one optical wave guide (14) between each LED (13) and an outer edge of the IC card (11).

2. Data exchange system according to Claim 1, characterised in that the optical wave guides (14) are arranged between the LEDs (13) and the outer edge of the IC card (11) facing the insertion slot of the IC card reader during operation.

3. Data exchange system according to Claim 1 or 2, characterised in that the optical wave guides (14) are embedded in the IC card (11).

**Revendications**

1. Système d'échange de données, constitué par au moins un terminal d'utilisateur, pouvant fonctionner avec une carte à puce (11), et au moins une carte à puce, et dans lequel chaque transfert de données entre la carte à puce (11) contenant le module de processeur intégré, et le terminal d'utilisateur possédant un lecteur de cartes à puce, est commandé par une série de procédures de sécurité, comme par exemple l'identification de l'utilisateur de la carte en rapport avec sa carte à puce, l'authentification de la carte vis-à-vis du système et inversement, la mémorisation et l'identification des données de communication, et dans lequel la carte à puce (11) possède au moins une diode à luminescence commandée (13) pour l'affichage du transfert de données et/ou des états de fonctionnement concernant les procédure de sécurité, caractérisé par le fait que la carte à puce (11) possède au moins respectivement un guide de lumière (14) entre chaque diode à luminescence (13) et un bord extérieur de la carte à puce (11).

2. Système d'échange de données suivant la revendication 1, caractérisé par le fait que les guides de lumière (14) sont disposés entre les diodes à luminescence (13) et le bord extérieur de la carte à puce (11), tourné vers la fente d'enfichage du lecteur de cartes à puce, pendant le fonctionnement.

3. Système d'échange de données suivant la revendication 1 ou 2, caractérisé par le fait que les guides de lumière (14) sont intégrés dans la carte à puce (11).

EP 0 302 453 B1

FIG 1

2

1

3

FIG 2

12

11

13

14

4